# EUROPÄISCHE PATENTSCHRIFT

(11) **EP 4 074 492 B1**
(45) Veröffentlichungstag und Bekanntmachung des Hinweises auf die Patenterteilung: **20.09.2023**
(21) Anmeldenummer: 21168160.6
(22) Anmeldetag: 13.04.2021
(51) Int. Cl.: B29C 65/16, B29K 101/12

(54) **SYSTEM ZUM FÜGEN VON WERKSTÜCKEN AUS THERMOPLASTISCHEM KUNSTSTOFF MITTELS LASERDURCHSTRAHLSCHWEISSEN**
SYSTEM FOR JOINING WORKPIECES OF THERMOPLASTIC MATERIAL BY THROUGH-TRANSMISSION LASER WELDING
SYSTÈME D'ASSEMBLAGE DE PIÈCES EN MATIÈRE THERMOPLASTIQUE PAR SOUDURE LASER PAR TRANSMISSION

(43) Veröffentlichungstag der Anmeldung: 19.10.2022
(73) Patentinhaber: Leister Technologies AG, 6056 Kägiswil (CH)
(72) Erfinder: Franke, Alexander, 6064 Kerns (CH); Csati, Daniel, 6056 Kägiswil (CH)
(74) Vertreter: Witte, Weller & Partner Patentanwälte mbB

(56) Entgegenhaltungen:
- WO-A1-2018/019809
- DE-A1-102005 000 002
- DE-A1-102009 049 064
- JP-A- 2016 155 319

## Beschreibung

Die Erfindung betrifft ein System zum Fügen zumindest zweier Werkstücke aus thermoplastischem Kunststoff mittels Laserdurchstrahlschweißen, umfassend wenigstens eine Einrichtung zur Erzeugung von Laserstrahlung und eine Abbildungsoptik mit einer ersten optischen Achse, wobei von der Einrichtung zur Erzeugung von Laserstrahlung emittierte Laserstrahlung in eine Fügezone geleitet wird und wobei die Abbildungsoptik zur optischen Abbildung aus einer Fügeebene in der Fügezone in eine Detektionsebene einer strahlungsdetektierenden Vorrichtung ausgebildet ist.

Apparaturen, Systeme und Vorrichtungen oder Verfahren zum Fügen zumindest zweier Werkstücke aus thermoplastischem Kunststoff sind aus dem Stand der Technik in verschiedenen Ausgestaltungen grundsätzlich bekannt.

Die DE 10 2009 049 064 A1 legt eine Vorrichtung zur Erfassung der Fügetemperatur beim Laserstrahlschweißen von Thermoplasten offen. Die Vorrichtung weist einen Laserbearbeitungskopf, ein Pyrometer sowie eine Abbildungsoptik auf, die einen vom Laserspot in der Fügeebene eingenommenen Bereich in die Detektionsebene des Pyrometers abbildet. Die Abbildungsoptik ist so gewählt, dass die Abbildung des vom Laserspot in der Fügeebene eingenommenen Bereichs in der Detektionsebene größer als die Detektionsfläche des Pyrometers ist. Mit der Vorrichtung lässt sich die Temperatur während des Fügeprozesses zuverlässig erfassen, so dass diese Messung für die Prozessregelung eingesetzt werden kann.

Im Rahmen der DE 10 2005 000 002 A1 wird ein Verfahren beschrieben, mit dem beim Laserdurchstrahlschweißen von Kunststoffen die mögliche Entstehung von Verbrennungen auf der Strahleintrittsseite des einen Fügepartners prozessbegleitend detektiert werden kann. Dazu wird vorgeschlagen, die von der Verbrennung ausgehende Strahlung durch ein entsprechendes Element zu detektieren und somit ein Ausschleusen eines geschädigten Bauteils zu ermöglichen.

Durch die JP 2016-155319 A wird ein System zur berührungslosen kontinuierlichen Überwachung des Materialzustands und der Nahtqualität im Zuge eines Fügeprozesses von thermoplastischen Kunststoffmaterialien mittels Laserdurchstrahlschweißen offenbart. Das System umfasst eine Laserstrahlungsquelle, die Laserstrahlung mit einer Wellenlänge zwischen 0,4 µm und 1,1 µm emittiert; ein optisches System zum Umlenken und Fokussieren von durch die Laserstrahlungsquelle emittierter Laserstrahlung in eine Fügezone an der Grenze zwischen zwei zu fügenden Werkstücken, welche auf einem Bearbeitungstisch montiert sind; Mittel zur Steuerung der jeweiligen Elemente des Systems wie der Laserstrahlungsquelle und ein Monitorelement zum Überwachen des Materialzustands und/oder der Nahtqualität in einer berührungslosen und zerstörungsfreien Weise. Ein Strahlungsthermometer des Monitorelements ist zur Detektion von elektromagnetischer Strahlung aus dem nahen Infrarotbereich (NIR) mit einer Wellenlänge zwischen 1,8 µm und 2,5 µm vorgesehen, welche bei der Durchführung des Fügeprozesses aus der Fügezone über eine Abbildungsoptik zu dem Strahlungsthermometer gelangt. Aus der Intensität der vom Strahlungsthermometer detektierten infraroten elektromagnetischen Strahlung wird die Temperatur in der Fügezone ermittelt. Die WO 2018/019809 A1 betrifft ein Fügeverfahren zum Fügen von zwei Fügeteilen insbesondere Laserschweißverfahren, bei dem mindestens ein mit einer durch eine Steuereinheit gesteuerten oder geregelten Strahlerzeugungseinheit erzeugter Arbeitsstrahl auf einen Bestrahlungsfleck einer Oberfläche mindestens eines Fügeteiles materialerweichend oder -schmelzend einwirkt, wobei zwischen der Strahlerzeugungseinheit und den Fügeteilen ein für die Strahlung des Arbeitsstrahles (6) undurchlässiges Abschirmmittel angeordnet ist. Um eine während des Fügeprozesses erfolgende Fügequalitätskontrolle zu ermöglichen wird vorgeschlagen, dass mittels einer auf einer den beiden Fügeteilen abgewandten Seite des Abschirmmittels angeordneten Wärmestrahlungsmesseinheit die Temperatur des Bestrahlungsflecks gemessen wird und das Abschirmmittel) Strahlung in dem Wellenlängenbereich des Arbeitsstrahles und des Messbereichs der Wärmestrahlungsmesseinheit im Wesentlichen absorbiert. Ferner betrifft die WO 2018/019809 A1 eine Fügeeinrichtung zur Durchführung dieses Fügeverfahrens.

Beim Laserdurchstrahlschweißen werden zwei Werkstücke aus thermoplastischem Kunststoff mittels Bestrahlung durch Laserstrahlung und Beaufschlagung von mechanischem Druck miteinander verbunden. Der mechanische Druck resultiert dabei etwa aus einer Spannvorrichtung, in der die zu fügenden Werkstücke miteinander eingespannt sind oder einer Presspassung der zu fügenden Werkstücke. In der Regel ist beim Laserdurchstrahlschweißen eines der beiden Werkstücke für die verwendete Laserstrahlung nahezu vollständig transparent und die Laserstrahlung transmittiert durch dieses Bauteil (fast) ungehindert, wohingegen das andere, zweite Werkstück für die verwendete Laserstrahlung stark absorbierend ist. Das transparente Werkstück ist dabei typischerweise nicht nur für die verwendete Laserstrahlung weitestgehend transparent, sondern grundsätzlich für elektromagnetische Strahlung zumindest aus dem sichtbaren Teil des elektromagnetischen Spektrums, im Folgenden als *optisch transparent* bezeichnet. Gegebenenfalls kann optische Transparenz zusätzlich auch Transparenz bezüglich des als nahes Infrarot bezeichneten Teil des elektromagnetischen Spektrums, das sich an das langwellige Ende des sichtbaren Teils des elektromagnetischen Spektrums anschließt und/oder für Teile des UV-Spektrums, die sich an das kurzwellige Ende des sichtbaren Teils des elektromagnetischen Spektrums anschließt, umfassen. Das für die verwendete Laserstrahlung absorbierende und daher intransparente Werkstück ist dabei zugleich auch optisch intransparent.

Durch die Absorption der Laserstrahlung im zweiten Werkstück erwärmt sich das zweite Werkstück und das thermoplastische Kunststoffmaterial des zweiten Werkstücks wird in einer gewissen Umgebung der von Laserstrahlung im zweiten Werkstück bestrahlten Bereiche aufgeschmolzen. Bedingt durch Wärmeleitung und/oder Wärmetransport im Werkstück schmilzt auch noch Kunststoffmaterial in Bereichen angrenzend an die unmittelbar von Laserstrahlung bestrahlten Bereich im zweiten Werkstück auf. Ebenso wird durch Wärmeleitung und/oder Wärmetransport Kunststoffmaterial in Bereichen des ersten, transparenten und von der Laserstrahlung durchstrahlten Werkstücks aufgeschmolzen, die in einer gewissen Umgebung der von der Laserstrahlung bestrahlten Bereiche des zweiten, absorbierenden Werkstücks liegen. Die Gesamtheit aller Bereiche, in denen in Folge der Bestrahlung mit Laserstrahlung in einer Umgebung des von der Laserstrahlung unmittelbar bestrahlten Bereichs im zweiten Werkstück und im angrenzenden ersten Werkstück das jeweilige Kunststoffmaterial aufgeschmolzen wird, definiert eine jeweilige Fügezone. Innerhalb einer solchen Fügezone vermischt sich Kunststoffmaterial beider Werkstücke, sodass die Werkstücke nach der Abkühlung des aufgeschmolzenen Kunststoffmaterials unter Applikation mechanischem Druck miteinander verbunden ("gefügt") sind. Die Gesamtheit aller Fügezonen an einem durch das Fügen zweier Werkstücke im Laserdurchstrahlschweißverfahren resultierenden Verbundwerkstück ergeben nach dem Erkalten und (wieder) Erstarren die Schweißnaht oder, sofern die Fügezonen etwa nicht alle zusammenhängen, gegebenenfalls die Schweißnähte an dem Verbundwerkstück.

Es ist auch möglich, zwei Werkstücke mittels Laserdurchstrahlschweißen zu fügen, wobei auch das zweite Werkstück zumindest weitgehend optisch transparent ist. Beim Verschweißen von zwei, aus optisch (weitgehend) transparenten Kunststoffen ausgebildeten Werkstücken kann Laserstrahlung mit Wellenlängen im Bereich von 1 µm in Kombination mit chemischen Absorbern als Hilfsmittel verwendet werden, wobei die chemischen Absorber im Wesentlichen die Laserstrahlung absorbieren und durch Wärmeentwicklung in Folge der Absorption das Kunststoffmaterial der zu fügenden Werkstücke in der Fügezone aufschmelzen. Die chemischen Absorber verblassen dabei, sodass auch das durch Fügung zweier optisch (weitgehend) transparente Werkstücke mittels Laserdurchstrahlschweißen ausgebildete Verbundwerkstück optisch (weitgehend) transparent ist. Alternativ kann zum Fügen zweier optisch (weitgehend) transparenter Werkstücke im Laserdurchstrahlschweißverfahren Laserstrahlung im Bereich von 2 µm Wellenlänge eingesetzt und die Volumenabsorption in dem Kunststoffmaterial der zu fügenden Werkstücke genutzt werden. Dabei ist das Ziel, ohne chemische Zusätze wie die vorstehend erwähnten chemischen Absorber zu schweißen, um etwa Kartuschen für medizintechnische Analysen zu fertigen, welche mit optischen Verfahren (z. B. Farbumschlag einer Reagenz) ausgewertet werden können.

Das Fügen von optisch (weitgehend) transparenten Werkstücken im Laserdurchstrahlschweißverfahren ist technisch anspruchsvoll. Aufgrund der geringen Absorption von Laserstrahlung im Kunststoffmaterial derartiger Werkstücke muss mit entsprechend hoher Ausgangsleistung der Einrichtung zur Erzeugung von Laserstrahlung gearbeitet werden, um die zu fügenden Werkstücke in einer Fügezone überhaupt aufschmelzen zu können. Bereits geringfügige Verunreinigungen des Kunststoffmaterials oder auf Grenzflächen des Kunststoffmaterials wenigstens in einer Fügezone, etwa kleine Staubteilchen, können in Folge der Bestrahlung mit dem Laser sich stark erhitzen oder gar entzünden und so zu einer Beschädigung der zu fügenden Werkstücke im Fügeprozess respektive zu massiven Qualitätsmängeln (Ausschuss bzw. Fehlproduktion) des im Fügeprozess ausgebildeten Verbundwerkstücks führen. Des Weiteren sind unterschiedliche Materialstärken an verschiedenen Stellen, an denen zwei Werkstücke gefügt werden sollen oder Schwei-βen im Bereich von Krümmungen sowie Kanten bzw. Ecken, oder allgemeiner formuliert, kompliziertere Geometrien der zu fügenden optisch (weitgehend) transparenten Werkstücke, problematisch. Dabei kann sich die Einstrahlcharakteristik von Laserstrahlung während des Laserdurchstrahlschweißprozesses ändern.

Bei der Absorption von Laserstrahlung etwa durch Kunststoffmaterial der in einem Laserdurchstrahlschweißprozess zu fügenden Werkstücke erwärmt sich Kunststoffmaterial in einer Fügezone. In Folge der Erwärmung wird wenigstens aus der Fügezone elektromagnetische Strahlung, Wärmestrahlung, emittiert. Die Wärmestrahlung kann durch geeignete, zur Detektion entsprechender elektromagnetischer Strahlung ausgebildete, strahlungsdetektierende Vorrichtungen detektiert werden. Zu derartigen strahlungsdetektierenden Vorrichtungen zählen etwa Pyrometer. Die Detektion von aus einer Fügezone emittierten Wärmestrahlung bei Durchführung eines Laserdurchstrahlschweißprozesses ermöglicht die Regelung des Prozesses insbesondere durch Anpassung der Ausgangsleistung der Einrichtung zur Erzeugung von Laserstrahlung in Abhängigkeit von den Messsignalen einer geeigneten und entsprechend eingerichteten strahlungsdetektierenden Vorrichtung.

Davon ausgehend liegt der vorliegenden Erfindung die Aufgabe zugrunde, eine Anordnung zum Fügen zumindest zweier Werkstücke aus thermoplastischem Kunststoff mittels Laserdurchstrahlschweißen vorzuschlagen, die simultan beim Laserdurchstrahlschweißen eine Regelung der Laserintensität in Abhängigkeit der Wärmeentwicklung in einer Fügezone auf einfache Art und Weise ermöglicht.

Die Aufgabe wird erfindungsgemäß durch ein System zum Fügen zumindest zweier Werkstücke aus thermoplastischem Kunststoff mittels Laserdurchstrahlschweißen nach Anspruch 1 gelöst. Weitere vorteilhafte Ausgestaltungen der Erfindung sind den jeweiligen zurückbezogenen Unteransprüchen zu entnehmen.

Demnach ist bei einem erfindungsgemäßen System zum Fügen zumindest zweier Werkstücke aus thermoplastischem Kunststoff mittels Laserdurchstrahlschweißen vorgesehen, dass an einem Einkoppelpunkt auf einer, zu der ersten optischen Achse parallel verlaufenden, zweiten optischen Achse ein Umlenkspiegel zur Umlenkung der Laserstrahlung aus einer mit der zweiten optischen Achse einen nichtverschwindenden Winkel, vorzugsweise einen rechten Winkel, einschließenden Eintrittsachse in eine Richtung entlang der zweiten optischen Achse angeordnet ist, wobei der Abstand zwischen dem Einkoppelpunkt und der Fügeebene bezüglich der zweiten optischen Achse geringer ist als der Abstand von der Detektionsebene zu der Fügeebene bezüglich der ersten optischen Ache, wobei der Durchmesser des Umlenkspiegels an die Querschnittsform und Querschnittsgröße der Laserstrahlung angepasst ist und bei einer Projektion des Umlenkspiegels auf eine Projektionsebene senkrecht zu der ersten optischen Achse die Projektionsfläche des Spiegels in der Projektionsebene vollständig innerhalb einer minimalen Apertur im Strahlengang der Abbildungsoptik angeordnet ist und die minimale Apertur nur teilweise abdeckt.

Die zweite optische Achse ist diejenige Achse, entlang der Laserstahlstrahlung ab dem Einkoppelpunkt propagiert. Sofern in dem für Laserstrahlung vorgesehen Strahlengang auf den Umlenkspiegel zumindest ein weiteres optisches Element folgt, das eine Änderung der Propagationsrichtung von Laserstrahlung hervorruft, dann stimmt die Propagationsrichtung von Laserstrahlung nach Passieren dieses weiteren optischen Elements im Allgemeinen nicht mehr mit der von der zweiten optischen Achse vorgegebenen Propagationsrichtung überein. Ein solches weiteres optisches Element kann etwa eine Fokussieroptik (z. B. eine Linse) sein, die Laserstrahlung in eine Fokusebene innerhalb einer Fügezone fokussiert, um die Leistungsdichte der Laserstrahlung auf einen bestimmten Bereich zu konzentrieren. Die Fügezone bildet sich dementsprechend um diesen Konzentrationsbereich der Leistungsdichte der Laserstrahlung aus. Eine derartige Fokussieroptik kann dabei zugleich wenigstens ein Teil der Abbildungsoptik zur Abbildung aus einer Fügezone in die Detektionsebene einer strahlungsdetektierenden Vorrichtung sein.

Im Allgemeinen fallen die erste optische Achse und die zweite optische Achse nicht zusammen.

Als minimale Apertur im Strahlengang der Abbildungsoptik wird dabei die kleinste Öffnung im Strahlengang und zugleich Teil der Abbildungsoptik verstanden, wobei gegebenenfalls die genaue Form dieser kleinsten Öffnung, insbesondere betreffend einer Projektion der Öffnung auf eine Projektionsebene senkrecht zur ersten optischen Achse, ebenfalls zu beachten wäre. Zweckmäßigerweise wird auch die minimale Apertur bzw. kleinste Öffnung im Strahlengang der Abbildungsoptik möglichst groß gewählt. Die minimale Apertur bzw. kleinste Öffnung kann dabei entsprechend der Begrifflichkeit Apertur eine Blende sein, aber auch irgendeine anderes Element, ein Bauteil, eine Vorrichtung oder dergleichen als Teil der Abbildungsoptik mit einer Wirkung entsprechend der einer Blende sein, etwa die Fassung bzw. der Rahmen einer Linse oder eines wellenlängenselektiven Elements (Filters).

Eine Fügeebene liegt innerhalb einer Fügezone, wobei, allerdings ohne Beschränkung der Allgemeinheit, vorgesehen ist, dass eine jeweilige Fügeebene in einer Fügezone an einer Grenze zweier in einer Fügezone aneinander angrenzenden, zu fügenden Werkstücken liegt. Der Fokus der Laserstrahlung liegt dabei im Allgemeinen nicht unbedingt in der Fügeebene. Die Fokusebene, in der der Fokus der Laserstrahlung liegt, kann mit der Fügeebene je nach der gewählten Strahlführung für die Laserstrahlung in die Fügezone zum Fokus einen Winkel einschließen, sodass sich die Ebenen schneiden. Liegt der Fokuspunkt, also der zentrale Punkt des Fokus der Laserstrahlung zugleich auch in der Fügeebene, dann liegt der Fokuspunkt auf der Schnittgeraden von Fügeebene und Fokusebene. Bei "eher dicken" ersten, von der Laserstrahlung also weitestgehend durchstrahlten Werkstücken liegt der Fokus der Laserstrahlung in einer Fügezone typischerweise nicht an der Grenze zweier zu fügender Werkstücke, sondern ein Stück weit in dem jeweiligen zweiten Werkstück. Bei "eher dünnen" ersten Werkstücken liegt der Fokus der Laserstrahlung in einer Fügezone typischerweise an der Grenze zweier zu fügender Werkstücke. Als grober Richtwert, jedoch ohne Beschränkung der Allgemeinheit, sei an dieser Stelle eine Materialstärke bzw. Dicke von um die 0,5 mm zur Unterscheidung zwischen "eher dünnen" Werkstücken, insbesondere Kunststofffolien, und "eher dicken" Werkstücken genannt.

Wie in einem vorstehenden Abschnitt bereits angesprochen, folgt aus der Erwärmung der zu fügenden Werkstücke bedingt durch die Absorption von Laserstrahlung in einer Fügezone Emission von Wärmestrahlung. Ein Teil dieser Wärmestrahlung kann entlang des Strahlengangs durch die Abbildungsoptik zu der strahlungsdetektierenden Vorrichtung gelangen. Dabei propagiert Wärmestrahlung ausgehend von der Fügezone bis zum Einkoppelpunkt entgegen der in die Fügezone geleiteten Laserstrahlung, wobei der Umlenkspiegel einem Teil der Wärmestrahlung bedingt durch seine Anordnung im Strahlengang der Abbildungsoptik den weiteren Weg zum Detektor versperrt bzw. Teile der Wärmestrahlung gegebenenfalls in die Richtung umlenkt, aus der Laserstrahlung auf den Umlenkspiegel einfällt und diese somit nicht mehr in die Detektionsebene bzw. zu der strahlungsdetektierenden Vorrichtung gelangen kann. Es ist dabei explizit nicht vorgesehen, dass der Umlenkspiegel einerseits entlang der Eintrittsachse einfallende Laserstrahlung in Richtung der zweiten optischen Asche umlenkt und andererseits (zugleich) entlang der parallel zu der zweiten optischen Achse verlaufenden ersten optischen Achse in Gegenrichtung zur Laserstrahlung einfallende Wärmestrahlung transmittiert. Der Umlenkspiegel ist ausschließlich entsprechend der verwendeten Laserstrahlung ausgebildet. Dadurch erreicht weniger Wärmestrahlung die Detektionsebene als wenn der Umlenkspiegel für Wärmestrahlung weitestgehend transmittierend ausgebildet oder überhaupt nicht (im Strahlengang der Abbildungsoptik) vorhanden wäre. Allerdings kann im Gegenzug auf aufwendig herzustellende und dementsprechend teure teildurchlässige bzw. wellenlängenselektive Spiegel verzichtet werden.

Bei einer bevorzugten Ausgestaltungsvariante eines erfindungsgemäßen Systems zum Fügen zumindest zweier Werkstücke aus thermoplastischem Kunststoff mittels Laserdurchstrahlschweißen ist vorgesehen, dass die Projektion des Umlenkspiegels (auf eine Projektionsebene senkrecht zu der ersten optischen Achse) maximal zwei Drittel, vorzugsweise nicht mehr als die Hälfte, der minimalen Apertur der Abbildungsoptik abdeckt. Dadurch ist sichergestellt, dass genügend Wärmestrahlung aus einer Fügezone in die Detektionsebene einer strahlungsdetektierenden Vorrichtung gelangen kann, um ein zuverlässig auswertbares Ausganssignal respektive Messsignal an der strahlungsdetektierenden Vorrichtung zu generieren.

Nach einer favorisierten Ausgestaltung eines erfindungsgemäßen Systems zum Fügen zumindest zweier Werkstücke aus thermoplastischem Kunststoff mittels Laserdurchstrahlschweißen fallen die erste optische Achse und die zweite optische Achse zusammen, d. h., Laserstrahlung propagiert zwischen dem Einkoppelpunkt und einer Fügeebene in einer Fügezone entlang der (ersten) optischen Achse der Abbildungsoptik. Der Strahlengang von Laserstrahlung zwischen dem Einkoppelpunkt und einer Fügeebene und der Strahlengang der Abbildungsoptik, der Wärmestrahlung aus einer Fügeebene entlang des Einkoppelpunkts zur Detektionsebene in Gegenrichtung zur Laserstrahlung folgt, sind somit koaxial.

Gemäß einer präferierten Ausgestaltungsvariante eines erfindungsgemäßen Systems zum Fügen zumindest zweier Werkstücke aus thermoplastischem Kunststoff mittels Laserdurchstrahlschweißen ist in einem Bereich entlang der ersten optischen Achse zwischen Detektionsebene und Einkoppelpunkt wenigstens ein wellenlängenselektives Element angeordnet. Das wellenlängenselektive optische Element kann dabei als Filter zur (weitgehenden) Unterdrückung eines oder mehrerer bestimmter Wellenlängenbereiche des elektromagnetischen Spektrums ausgebildet sein, wobei elektromagnetische Strahlung aus eben diesem oder diesen Wellenlängenbereich(en) nicht entlang des Strahlengangs der Abbildungsoptik in die Detektionsebene der strahlungsdetektierenden Vorrichtung gelangen sollen. Dies betrifft insbesondere gestreute Teile der Laserstrahlung.

Bei einer begünstigten Ausgestaltungsvariante eines erfindungsgemäßen Systems zum Fügen zumindest zweier Werkstücke aus thermoplastischem Kunststoff mittels Laserdurchstrahlschweißen ist das wellenlängenselektive Element als Kurzpassfilter, Langpassfilter, Bandpassfilter oder Kerbfilter ausgebildet ist. Vorzugsweise ist das wellenlängenselektive Element insbesondere dazu ausgebildet, die Laserstrahlung (weitestgehend) zu unterdrücken.

Gemäß einer weiteren besonders bevorzugten Ausgestaltungsvariante eines erfindungsgemäßen Systems zum Fügen zumindest zweier Werkstücke aus thermoplastischem Kunststoff mittels Laserdurchstrahlschweißen wird der Umlenkspiegel von einer Umlenkspiegelhalterung gehalten, wobei die Umlenkspiegelhalterung zumindest eine Halterungsbasis und ein Halteelement umfasst, wobei die Halterungsbasis einen Freiraum aufweist, der von der Halterungsbasis zumindest teilweise umlaufend um die erste optische Achse berandet bzw. umschlossen wird und eine Projektion des Freiraums auf eine Projektionsebene senkrecht zu der ersten optischen Achse eine minimale Apertur der Abbildungsoptik vollständig einschließt, wobei sich von der Halterungsbasis zumindest eine Strebe geradlinig oder gekrümmt in den Freiraum hinein erstreckt und die Halterungsbasis mit dem Halteelement verbindet, und wobei das Halteelement zum Halten des Umlenkspiegels ausgebildet ist.

Die Halterungsbasis der Umlenkspiegelhalterung erstreckt sich zumindest teilweise und umlaufend um die erste optische Achse um einen Freiraum (eine Ausnehmung, eine Öffnung), wobei sich der Freiraum (die Ausnehmung, die Öffnung) entlang der ersten optischen Achse vollständig durch die Halterungsbasis hindurch erstreckt. Der Freiraum ist bezüglich seiner Ausdehnung in einer Ebene senkrecht zu der ersten optischen Achse mindestens ebenso groß wie eine minimale Apertur der Abbildungsoptik, sodass bei einer Projektion des Freiraums auf eine Ebene senkrecht zu der ersten optische Achse die Projektionsfläche des Freiraums wenigstens eine minimale Apertur der Abbildungsoptik vollständig beinhaltet. In dem Freiraum (der Ausnehmung, der Öffnung) ist das Haltelement angeordnet, welches durch zumindest eine geradlinige oder gekrümmte Strebe mit der Halterungsbasis verbunden ist. Das Halteelement ist, gegebenenfalls durch zusätzlich vorgesehene Befestigungsmittel zur Befestigung des Umlenkspiegels an dem Halteelement, zum zerstörungsfrei lösbaren oder nicht zerstörungsfrei lösbaren Halten des Umlenkspiegels ausgebildet. Vorzugsweise ist das Halteelement zudem derart ausgestaltet, dass eine Projektion des Halteelements auf eine Projektionsebene senkrecht zu der ersten optischen Achse die Projektion des Halteelements bei einer Überlagerung mit einer entsprechenden Projektion des Umlenkspiegels vollständig überdeckt wird. Dies bedeutet, dass das Halteelement kein zusätzliches Hindernis (zusätzlich zu dem Hindernis, dass der Umlenkspiegel für sich alleine genommen bereits darstellt) für Wärmestrahlung im Strahlengang der Abbildungsoptik darstellt. Die Halterungsbasis, die zumindest eine Strebe und das Halteelement könne jeweils ein- oder mehrteilig ausgebildet werden. Vorzugsweise sind Halterungsbasis, Strebe(n) und Halteelement jeweils einteilig ausgebildet. Ganz besonders bevorzugt sind Halterungsbasis, Strebe(n) und Halteelement miteinander einteilig, also die gesamte Umlenkspiegelhalterung als ein Stück ausgebildet.

Bei einer weiteren favorisierten Ausgestaltungsvariante eines erfindungsgemäßen Systems zum Fügen zumindest zweier Werkstücke aus thermoplastischem Kunststoff mittels Laserdurchstrahlschweißen ist die strahlungsdetektierende Vorrichtung zur Detektion von elektromagnetischer Strahlung aus dem nahen Infrarotbereich des elektromagnetischen Spektrums ausgebildet.

Nach einer weiteren präferierten Ausgestaltungsvariante eines erfindungsgemäßen Systems zum Fügen zumindest zweier Werkstücke aus thermoplastischem Kunststoff mittels Laserdurchstrahlschweißen ist die strahlungsdetektierende Vorrichtung zur Detektion von elektromagnetischer Strahlung in einem Detektionsbereich als Teilbereich des elektromagnetischen Spektrums ausgebildet ist, der in einem zentralen Bereich die Wellenlänge der Laserstrahlung einschließt. Eine derartig ausgebildete strahlungsdetektierende Vorrichtung wird vorzugsweise mit wenigstens einem Kerbfilter (im Strahlengang der Abbildungsoptik) kombiniert, wobei der Kerbfilter dann zur Unterdrückung elektromagnetischer Strahlung entsprechend der der verwendeten Laserstrahlung ausgelegt ist.

Eine weitere begünstige Ausgestaltungsvariante eines erfindungsgemäßen Systems zum Fügen zumindest zweier Werkstücke aus thermoplastischem Kunststoff mittels Laserdurchstrahlschweißen umfasst die Ausbildung der strahlungsdetektierende Vorrichtung zur Detektion von elektromagnetischer Strahlung in einem Detektionsbereich als Teilbereich des elektromagnetischen Spektrums derart, dass die Wellenlänge der Laserstrahlung lediglich in einem Randbereich oder gar nicht einschließt. Je nachdem, ob die Wellenlänge der verwendeten Laserstrahlung im Bereich der unteren Grenze des Detektionsbereichs oder im Bereich der oberen Grenze des Detektionsbereichs der strahlungsdetektierenden Vorrichtung liegt, wird eine entsprechend ausgebildete strahlungsdetektierende Vorrichtung vorzugsweise mit zumindest einem Langpassfilter oder wenigstens einem Kurzpassfilter (im Strahlengang der Abbildungsoptik) kombiniert. Sofern die Wellenlänge der verwendeten Laserstrahlung (weiter) außerhalb des Detektionsbereichs der Strahlungsdetektierenden Vorrichtung liegt, kann gegebenenfalls auch auf Filter verzichtet werden, sofern die strahlungsdetektierende Vorrichtung nicht durch die verwendete Laserstrahlung grundsätzlich beschädigt werden könnte, auch wenn die Laserstrahlung von der strahlungsdetektierenden Vorrichtung nicht detektiert wird bzw. nicht detektiert werden kann. Eine derart ausgebildete strahlungsdetektierende Vorrichtung kann auch mit zumindest einem Bandpassfilter kombiniert werden, der gerade (nur) elektromagnetische Strahlung entsprechend dem Detektionsbereich der strahlungsdetektierenden Vorrichtung und/oder entsprechend der aus einer Fügezone bei Bestrahlung mit dem Laser zu erwartenden Wärmestrahlung passieren lässt.

Bei einer zusätzlichen besonders bevorzugten Ausgestaltungsvariante eines erfindungsgemäßen Systems zum Fügen zumindest zweier Werkstücke aus thermoplastischem Kunststoff mittels Laserdurchstrahlschweißen weist die strahlungsdetektierende Vorrichtung zumindest eine Photodiode, vorzugsweise eine Indiumgalliumarsenid-Photodiode, auf. Die Photodiode ist dementsprechend in dieser Ausgestaltung das eigentliche detektierende Element der strahlungsdetektierenden Vorrichtung. Die strahlungsdetektierende Vorrichtung kann dabei lediglich eine einzelne Photodiode aufweisen, d. h., als Photodetektor mit einem Pixel ausgebildet sein. Die strahlungsdetektierende Vorrichtung kann aber etwa auch als Photodiodenzeile mit mehreren Pixeln angeordnet entlang einer (geraden) Linie oder als Photodiodenarray ausgebildet sein, wobei mehrere Pixel in einer (ebenen) Fläche in einem Muster angeordnet sind. Als Pixel wird dabei ein zur Detektion auf die strahlungsdetektierende Vorrichtung einfallende elektromagnetische Strahlung vorgesehener bzw. ausgebildeter Detektionsbereich als Teilbereich der Detektionsebene der strahlungsdetektierenden Vorrichtung verstanden. Alternative Ausgestaltungen einer strahlungsdetektierenden Vorrichtung sehen Bolometer oder Mikrobolometer als eigentliche strahlungsdetektierende Elemente vor, wobei derartige strahlungsdetektierende Vorrichtungen wiederum mit einem Pixel, als Zeile mit mehreren Pixeln oder in Form eines Arrays ausgebildet sein können. Die strahlungsdetektierende Vorrichtung kann neben dem oder den eigentlichen strahlungsdetektierenden Elementen etwa Mittel zur Ansteuerung der eigentlichen strahlungsdetektierenden Elementen, Mittel zur Signalverarbeitung, etwa der Signale der eigentlichen strahlungsdetektierenden Elemente hervorgerufen durch auf die eigentlichen strahlungsdetektierenden Elementen einfallende detektierbare elektromagnetische Strahlung, oder dergleichen umfassen.

Grundsätzlich ist vorgesehen, dass eine strahlungsdetektierende Vorrichtung wie eine Photodiode ein physikalisches Signal, etwa ein elektrisches Signal, als Ausgangssignal respektive Messsignal liefert, dass eine wohldefinierte Beziehung zu der aus der Fügezone auf die strahlungsdetektierende Vorrichtung einfallende und von dieser detektierten elektromagnetischen Strahlung (Wärmestrahlung) aufweist und dementsprechend Rückschlüsse auf die von der strahlungsdetektierenden Vorrichtung detektierte elektromagnetische Strahlung, insbesondere etwa die Leistungsdichte der detektierten elektromagnetischen Strahlung, ermöglicht. Im Allgemeinen ist die Bestimmung der absoluten Temperatur des erwärmten und gegebenenfalls geschmolzenen Kunststoffmaterials der zu fügenden Werkstücke in einer Fügezone über die von der Fügezone ausgehenden und von der strahlungsdetektierenden Vorrichtung detektierten Wärmestrahlung aufgrund der zahlreichen dabei zu berücksichtigenden Parameter, unter anderem Material- und Werkstückparameter, bestenfalls schwerlich möglich. Dies ist jedoch auch keinesfalls zwingend notwendig. Es genügt, wenn etwa mittels der von der strahlungsdetektierenden Vorrichtung detektierten Wärmestrahlung und dem entsprechenden Ausgangssignal der strahlungsdetektierenden Vorrichtung Schwellwerte definiert werden können, innerhalb derer ein adäquates Fügeergebnis beim Laserdurchstrahlschweißen zweier zu fügender Werkstücke sichergestellt werden kann und die (Ausgangsleistung der) Einrichtung zur Erzeugung von Laserstrahlung entsprechend dieser Schwellwerte geregelt werden kann. Eine Regelung kann aber etwa auch die Lage des Fokus von Laserstrahlung innerhalb der zu fügenden Werkstücke, z. B. relativ zu einer Fügeebene, betreffen. Des Weiteren kann eine Regelung die Zeitdauer der Bestrahlung eines bestimmten Bereichs in einer vorgesehenen Fügezone oder Schweißzone an einer Grenze zwischen zwei zu fügenden Werkstücken betreffen. Die entsprechende Regelung betrifft dann etwa die Geschwindigkeit, mit der ein Laserkopf oder Prozesskopf, von dem ausgehend Laserstrahlung in eine Fügezone oder Schweißzone geleitet wird, entlang der Fügezone oder Schweißzone bewegt wird.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Zur Ausführung der Erfindung müssen nicht alle Merkmale des Anspruchs 1 verwirklicht sein. Auch können einzelne Merkmale des Anspruchs 1 durch andere offenbarte Merkmale oder Merkmalskombinationen ersetzt werden.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oderfunktionsgleiche Elemente mit identischen Bezugszeichen versehen sind. Dabei zeigen:
- Fig. 1: Eine schematische Übersichtsdarstellung einer Ausgestaltungsvariante eines erfindungsgemäßen Systems zum Fügen zumindest zweier Werkstücke aus thermoplastischem Kunststoff mittels Laserdurchstrahlschweißen; und
- Fig. 2: eine beispielhafte Umlenkspiegelhalterung samt Umlenkspiegel für ein erfindungsgemäßes System zum Fügen zumindest zweier Werkstücke aus thermoplastischem Kunststoff mittels Laserdurchstrahlschweißen in dreidimensionaler isometrischer Darstellung.

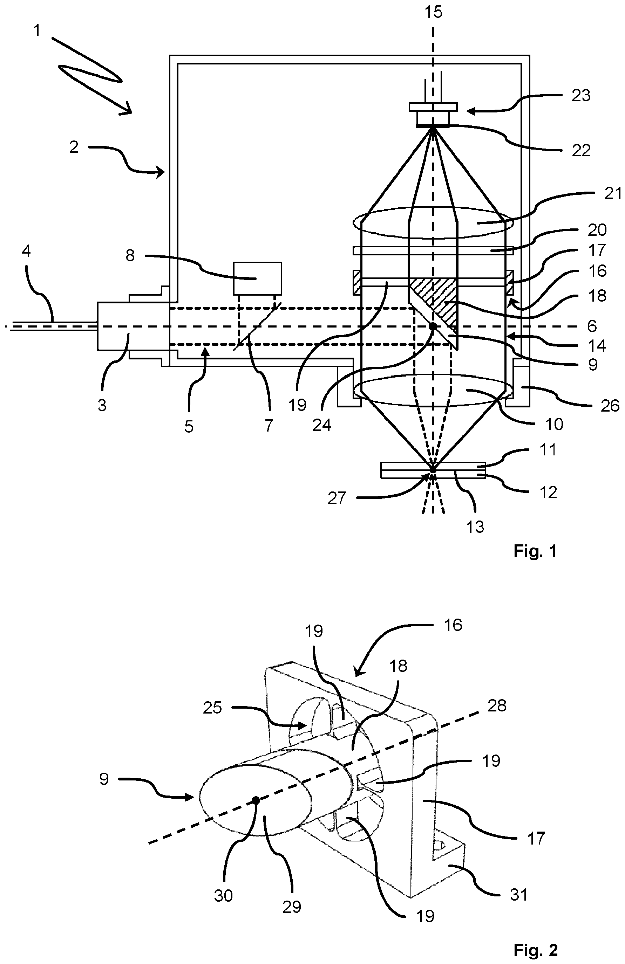

In Figur 1 ist eine schematische Übersichtsdarstellung einer Ausgestaltungsvariante eines erfindungsgemäßen Systems zum Fügen zumindest zweier Werkstücke aus thermoplastischem Kunststoff mittels Laserdurchstrahlschweißen in Form eines Prozesskopfs 1 mit einem (Prozesskopf-)Gehäuse 2 gezeigt. Bis auf die Zuführung für Laserstrahlung 5, angedeutet in Form eines Lichtwellenleiters 4 mit einem Faserstecker 3 an einem zu dem Gehäuse 2 des Prozesskopfs 1 führenden Ende des Lichtwellenleiters 4, sind alle weiteren Elemente des Systems im Inneren des Gehäuses 2 angeordnet. Der Faserstecker 3 ist in der Darstellung gemäß Figur 1 seitlich mit dem Gehäuse verbunden und weist eine (nicht weiter im Detail gezeigte) Strahlaufweitung für zu dem Prozesskopf 1 geführte Laserstrahlung 5 auf. Der Strahlengang der aus dem Faserstecker 3 in das Innere des Gehäuse 2 des Prozesskopfes 1 eintretenden Laserstrahlung 5 wird in der Figur 1 mittels gestrichelter Linien als symbolischer äußerer Strahlbegrenzungen der Laserstrahlung 5 senkrecht zu der Ausbreitungsrichtung der Laserstrahlung 5 entsprechend den Prinzipien der Strahlenoptik bzw. der geometrischen Optik angedeutet. Die Laserstrahlung 5 breitet sich nach Eintritt in das Gehäuse 2 zunächst entlang der Eintrittsachse 6 aus.

Eine Einrichtung zur Erzeugung von Laserstrahlung, also eine Laserstrahlungsquelle oder kurz,Laser', die grundsätzlich auch Teil eines erfindungsgemäßen Systems zum Fügen zumindest zweier Werkstücke aus thermoplastischem Kunststoff mittels Laserdurchstrahlschweißen, ist, verbleibt in der Darstellung eines Ausführungsbeispiels gemäß Figur 1 unberücksichtigt, nicht zuletzt, da sich der 'Laser' außerhalb des Prozesskopfes 1 befindet. Dadurch kann der Prozesskopf 1 wesentlich kompakter gestaltet werden. Zudem ist vorgesehen, dass der Prozesskopf 1 wenigstens entlang einer Raumachse ein Stück weit bewegbar und gegebenenfalls zusätzlich wenigstens um eine (weitere) Raumachse drehbar und/oder schwenkbar ist. Als 'Laser' ist für das in Figur 1 gezeigte Ausführungsbeispiel ein Dauerstrich-Faserlaser mit einer maximalen Ausgangsleistung von 200 W, einer Wellenlänge von 1940 nm und einer Beugungsmaßzahl M² < 1,1 vorgesehen.

An einem Strahlteiler 7 wird ein Teil der Laserstrahlung 5 (etwa 1% bis 2% der Leistungsdichte der auf den Strahlteiler 7 einfallenden Laserstrahlung 5) senkrecht zu der Eintrittsachse 6 abgelenkt und zu Mitteln zur Laserleistungsmessung 8 geleitet. Die Mittel zur Laserleistungsmessung 8 umfassen etwa eine zur Detektion der Laserstrahlung geeignete Photodiode und einen oder mehrere Filter zur Abschwächung der zu den Mitteln zur Laserleistungsmessung 8 geleiteten Laserstrahlung (in der Figur 1 nicht im Details dargestellt), um die Photodiode nicht zu überlasten oder gar zu beschädigen. Die Mittel zur Laserleistungsmessung 8 ermöglichen eine Überwachung der Leistung des ,Lasers' im Betrieb und sind damit wesentlich auch für eine Regelung der Ausgangsleistung des 'Lasers'.

Der Hauptteil der Laserstrahlung 5 passiert den Strahlteiler 7 und breitet sich weiter entlang der Eintrittsachse 6 aus, bis die Laserstrahlung 5 auf den Umlenkspiegel 9 trifft. Der Umlenkspiegel 9 lenkt die entlang der Eintrittsachse 6 einfallenden Laserstrahlung 5 um 90° um. Die Laserstrahlung 5 propagiert danach entlang der optischen Achse 15 in Richtung zweier zu fügender, optisch transparenter Werkstücke 11 und 12. Die optische Achse 15 und die Eintrittsachse 6 sind senkrecht zueinander ausgerichtet und schneiden sich am Einkoppelpunkt 24. Der Einkoppelpunkt 24 liegt im Zentrum der Spiegeloberfläche des Umlenkspiegels 9. Die Laserstrahlung 5 wird von einer ersten Linse 10 fokussiert. Die Fokusebene der Laserstrahlung 5 fällt in der Darstellung gemäß Figur 1 mit der Fügeebene 13 an der Grenze zwischen den beiden aneinander angrenzenden zu fügenden Werkstücke 11 und 12 zusammen. Die schematische Darstellung in der Figur 1 folgt den Prinzipien der Strahlenoptik, wobei der Fokus stark vereinfacht als punktförmig dargestellt wird. Tatsächlich hat der Fokus der Laserstrahlung 5 in der Fokusebene/Fügeebene 13 eine nichtverschwindende Ausdehnung, es handelt sich also um eine endlich große Fläche, vgl. Konzept des Gauß-Strahls als realistischere Annährung an den "tatsächlichen" Fokus eines Bündels elektromagnetischer Strahlung.

Die erste Linse 10 dient einerseits und primär zur Fokussierung der Laserstrahlung 5. Andererseits und sekundär ist die erste Linse 10 jedoch auch Teil der Abbildungsoptik 10, 21, im Wesentlichen bestehend aus der bereits genannten ersten Linse 10 und der zweiten Linse 21. Die erste Linse 10 ist dabei in einem Rahmen 26 als Teil des Gehäuses 2 des Prozesskopfes 1 eingefasst und ist somit zugleich ein Gehäusefenster. Die Abbildungsoptik 10, 21 bildet aus der Fügeebene 13 in eine Detektionsebene 22 einer in der Darstellung in Figur 1 als Photodiode 23 angedeuteten strahlungsdetektierenden Vorrichtung. Die Photodiode 23 ist dabei als InGaAs-Photodiode mit einem Pixel ausgebildet. Der Schwerpunkt des Detektionsbereichs der Photodiode 23 liegt im nahen Infrarot bei Wellenlängen zwischen 1500 nm und 2500 nm. Die Wellenlänge der Laserstrahlung 5 liegt dann genau im Zentrum des Detektionsbereichs der Photodiode 23. Zur Abschirmung der Photodiode 23 vor etwa an optischen Grenzflächen der ersten Linse 10 oder den Werkstücken 11, 12 reflektierten/gestreuten Teiles der Laserstrahlung 5 ist im Strahlengang der Abbildungsoptik 10, 21 ein Kerbfilter 20 als wellenlängenselektives Element angeordnet, der gerade elektromagnetische Strahlung mit der der Laserstrahlung 5 entsprechenden Wellenlänge im Bereich von 1940 ± 50 nm (nahezu) vollständig unterdrückt ("filtert"), jedoch elektromagnetische Strahlung mit allen anderen Wellenlängen im Detektionsbereich der Photodiode 23 (nahezu) ungehindert transmittiert.

Die optische Achse 15, entlang der die Laserstrahlung nach Umlenkung am Umlenkspiegel 9 in Richtung der zu fügenden Werkstücke 11, 12 propagiert, ist zugleich die optische Achse der Abbildungsoptik 10, 21. Eine Unterscheidung zwischen einer ersten, der Abbildungsoptik 10, 21 zugeordneten, optischen Achse und einer zweiten, der Laserstrahlung 5 ab der Umlenkung am Umlenkspiegel 9 zugeordneten, optischen Achse bei dem in der Figur 1 dargestellten Ausführungsbeispiel nicht notwendig, da die Achsen in diesem Fall ohnehin zu einer optischen Achse 15 zusammenfallen. Die Bestrahlung der zu fügenden Werkstücke 11, 12 durch Laserstrahlung 5 bei deren zumindest durch teilweise Absorption der Laserstrahlung 5 in einer Umgebung des Fokus der Laserstrahlung 5 hervorgerufene Erwärmung der zu fügenden Werkstücke 11, 12 führt zu einer Emission von Wärmestrahlung. Ein Teil dieser Wärmestrahlung 14 kann durch die Abbildungsoptik 10, 21 in die Detektionsebene 22 der Photodiode 23 gelangen. Der Strahlengang der Wärmestrahlung 14 zwischen Fügeebene 23 und Detektionsebene 22 und damit der Strahlengang der Abbildungsoptik 10, 21 wird in der Figur 1 mittels durchgezogener Linien als symbolischer äußerer Strahlbegrenzung senkrecht zu der Ausbreitungsrichtung der Wärmestrahlung 14 entsprechend den Prinzipien der Strahlenoptik bzw. der geometrischen Optik angedeutet. Tatsächlich liegt also ebenso wie beim Fokus der Laserstrahlung 5 kein punktförmiger Ausgangspunkt der Wärmestrahlung vor, sondern ein endlich großer räumlicher Bereich, wobei ein Schnitt durch eben diesen Bereich entlang der Fügeebene/Fokusebene 13 dabei wenigstens den (tatsächlichen, endlich großen) Fokus 27 der Laserstrahlung 5 vollständig einschließt. Wärmestrahlung 14, die zu der ersten Linse 10 gelangt, wird von dieser zunächst kollimiert. In Gegenrichtung wird die kollimiert zu der ersten Linse 10 geführte Laserstrahlung 5, wie schon erwähnt, fokussiert. Zwischen dem Einkoppelpunkt 24 und der Fügeebene 13 verlaufen die Strahlengänge von Laserstrahlung 5 und Wärmestrahlung 14 koaxial, wobei Laserstrahlung 5 und Wärmestrahlung 14 jeweils entlang der optischen Achse 15 propagieren, jedoch in entgegengesetzte Richtungen. Der Strahlquerschnitt der Laserstrahlung 5 ist dabei deutlich kleiner (weniger als halb so groß) wie der Strahlquerschnitt der Wärmestrahlung 14. Allerdings schneidet der Umlenkspiegel 9 für die Laserstrahlung 5 gewissermaßen ein zentrales Loch in den weiteren Strahlengang der Wärmestrahlung 14, da der Umlenkspiegel 9 samt Haltelement 18 für den Umlenkspiegel 9 als Teil der Umlenkspiegelhalterung 16 auf der optischen Achse 15 im Zentrum des Strahlengangs der Wärmestrahlung 14 bzw. der Abbildungsoptik 10, 21 angeordnet ist und folglich für einen Teil der Wärmestrahlung 14 ein Erreichen der Detektionsebene 22 unmöglich macht. Zu weiteren kleinen Verlusten' an, also die Detektionsebene 22 nicht erreichender, Wärmestrahlung 14 führen die Streben 19 als Verbindung zwischen dem Haltelement 18 und der Halterungsbasis 17 der Umlenkspiegelhalterung 16.

Eine solche Umlenkspiegelhalterung 16 samt Umlenkspiegel 9 ist für sich alleine genommen in einer dreidimensionalen isometrischen Ansicht in Figur 2 beispielhaft dargestellt. In Figur 1 ist ein Schnitt durch eine derartige Umlenkspiegelhalterung 16 als Teil des Prozesskopfes 1 angedeutet. Die Umlenkspiegelhalterung 16 besteht aus einer Halterungsbasis 17, einem Halteelement 18 und vier Streben 19, die die Halterungsbasis 17 und das Halteelement 18 miteinander verbinden (von den Streben 19 sind in der Figur 2 nur drei sichtbar, ein vierte Strebe 19 wird von dem Halteelement 18 nahezu vollständig verdeckt). Die Halterungsbasis 18 ist flach quaderförmig mit einem Fortsatz 31 zur Ausbildung eines Standsockels an einer der beiden flachen, breiten Quaderseiten ausgebildet. Die Halterungsbasis 18 weist einen zentralen Freiraum (eine Ausnehmung, eine Öffnung) 25 mit einem kreisförmigen Querschnitt auf, der von der Halterungsbasis 18 vollständig umlaufend um den Kreismittelpunkt des Querschnitts des Freiraums berandet respektive umschlossen wird. Der Freiraum 25 erstreckt sich parallel zu den kürzesten Seiten der Halterungsbasis 17 vollständig durch die Halterungsbasis 17 hindurch. Im Zentrum des Freiraums 25 bzw. konzentrisch zu dem Rand des Freiraums 25 ist das Halteelement 18 angeordnet. Das Halteelement 18 ist mittels vier sich geradlinig vom Rand in das Zentrum des Freiraums 25 erstreckender Streben 19 mit der Halterungsbasis 17 verbunden. Die Streben 19 sind äquidistant entlang des Rands des Freiraums 25 (im Winkel von 90° zueinander) angeordnet. Durch die Halterungsbasis 18 und zusätzlich, wenn auch in deutlich geringerem Maße durch die Streben 19, wird ein nicht unerheblicher Teil des Freiraums 25 blockiert und ist in diesem Sinne nicht mehr "frei". Das Halteelement 18 ist ein in Form eines an einer Seite mit einem Winkel von 45° schräg geschnittenen Zylinders ausgebildet, diese Seite schließt also einen Winkel von 45° mit der Zylindersymmetrieachse 28 ein. An dieser schräg geschnittenen Seite des Halteelements 18 ist der Umlenkspiegel 9 fixiert. Der Umlenkspiegel 9, insbesondere die Spiegeloberfläche 29, ist elliptisch (die schräg geschnittene Seite des Haltelements 18 ist ebenso elliptisch). Der Umlenkspiegel 9 passt dabei genau auf die schräg geschnittene Seite des Haltelements 17. Das Zentrum des Umlenkspiegels 9 fällt mit der Zylindersymmetrieachse 28 des Halteelements 17 zusammen, wobei diese wiederum exakt durch das Zentrum des Freiraums 25 (Kreismittelpunkt des Querschnitts des Freiraums 25) verläuft. Ist die Umlenkspiegelhalterung 16 mitsamt Umlenkspiegel 9 wie in Figur 1 gezeigt, als Teil eines erfindungsgemäßes Systems bzw. Prozesskopfes 1 in einem solchen angeordnet, dann fällt die Zylindersymmetrieachse 28 des Haltelements 17 mit der optischen Achse 15 zusammen und das Zentrum 30 der Spiegeloberfläche 29 des elliptischen Umlenkspiegels 9, welches zugleich der Einkoppelpunkt 24 ist, liegt auf der optischen Achse 15. Die elliptische Ausbildung des Umlenkspiegels 9 hat zur Folge, dass, wenn man die Spiegeloberfläche 29 des Umlenkspiegels 9 bei Anordnung des Umlenkspiegels 9 wie in Figur 1 gezeigt, sowohl auf eine Projektionsebene senkrecht zu der Eintrittsachse 6 als auch senkrecht zu der optische Achse 15 projiziert, die jeweilige Projektion der Spiegeloberfläche 29 kreisförmig ist.

### Bezugszeichenliste

- 1: Prozesskopf
- 2: Gehäuse
- 3: Faserstecker
- 4: Lichtwellenleiter
- 5: Strahlengang Laserstrahlung
- 6: Eintrittsachse
- 7: Strahlteiler
- 8: Mittel zur Laserleitungsmessung
- 9: Umlenkspiegel
- 10: Erste Linse
- 11: Erstes Werkstück
- 12: Zweites Werkstück
- 13: Fügeebene
- 14: Strahlengang Wärmestrahlung
- 15: Optische Achse
- 16: Umlenkspiegelhalterung
- 17: Halterungsbasis
- 18: Halteelement
- 19: Strebe
- 20: Kerbfilter (wellenlängenselektives Element)
- 21: Zweite Linse
- 22: Detektionsebene
- 23: Photodiode (strahlungsdetektierende Vorrichtung)
- 24: Einkoppelpunkt
- 25: Freiraum
- 26: Rahmen
- 27: Fokus Laserstrahlung
- 28: Symmetrieachse Halteelement (Zylindersymmetrieachse)
- 29: Spiegeloberfläche Umlenkspiegel
- 30: Zentrum Spiegeloberfläche Umlenkspiegel
- 31: Fortsatz/Sockel Halterungsbasis

## Patentansprüche

1. System zum Fügen zumindest zweier Werkstücke (11, 12) aus thermoplastischem Kunststoff mittels Laserdurchstrahlschweißen, umfassend wenigstens eine Einrichtung zur Erzeugung von Laserstrahlung und eine Abbildungsoptik (10, 21) mit einer ersten optischen Achse, wobei von der Einrichtung zur Erzeugung von Laserstrahlung emittierte Laserstrahlung (5) in eine Fügezone geleitet wird und wobei die Abbildungsoptik (10, 21) zur optischen Abbildung aus einer Fügeebene (13) in der Fügezone in eine Detektionsebene (22) einer strahlungsdetektierenden Vorrichtung (23) ausgebildet ist, wobei an einem Einkoppelpunkt (24) auf einer, zu der ersten optischen Achse parallel verlaufenden, zweiten optischen Achse ein Umlenkspiegel (9) zur Umlenkung der Laserstrahlung (5) aus einer mit der zweiten optischen Achse einen nichtverschwindenden Winkel, vorzugsweise einen rechten Winkel, einschließenden Eintrittsachse (6) in eine Richtung entlang der zweiten optischen Achse angeordnet ist, wobei der Abstand zwischen dem Einkoppelpunkt (24) und der Fügeebene (13) bezüglich der zweiten optischen Achse geringer ist als der Abstand von der Detektionsebene (22) zu der Fügeebene (13) bezüglich der ersten optischen Ache, wobei der Durchmesser des Umlenkspiegels (9) an die Querschnittsform und Querschnittsgröße der Laserstrahlung (5) angepasst ist und **dadurch gekennzeichnet, dass** bei einer Projektion des Umlenkspiegels (9) auf eine Projektionsebene senkrecht zu der ersten optischen Achse die Projektionsfläche des Umlenkspiegels (9) in der Projektionsebene vollständig innerhalb einer minimalen Apertur im Strahlengang der Abbildungsoptik (10, 21) angeordnet ist und die minimale Apertur nur teilweise abdeckt.

2. System nach Anspruch 1, **dadurch gekennzeichnet, dass** die Projektion des Umlenkspiegels (9) maximal zwei Drittel, vorzugsweise nicht mehr als die Hälfte, der minimalen Apertur der Abbildungsoptik (10, 21) abdeckt.

3. System nach einem der Ansprüche 1 oder 2 **dadurch gekennzeichnet, dass** die erste optische Achse und die zweite optische Achse zu einer gemeinsamen optischen Achse (15) zusammenfallen.

4. System nach einem der Ansprüche 1 bis 3, **dadurch gekennzeichnet, dass** in einem Bereich entlang der ersten optischen Achse zwischen Detektionsebene (22) und Einkoppelpunkt (24) wenigstens ein wellenlängenselektives Element (20) angeordnet ist.

5. System nach Anspruch 4, **dadurch gekennzeichnet, dass** das wellenlängenselektive Element (20) als Kurzpassfilter, Langpassfilter, Bandpassfilter oder Kerbfilter ausgebildet ist.

6. System nach einem der Ansprüche 1 bis 5, **dadurch gekennzeichnet, dass** der Umlenkspiegel (9) von einer Umlenkspiegelhalterung (16) gehalten wird, wobei die Umlenkspiegelhalterung (16) zumindest eine Halterungsbasis (17) und ein Halteelement (18) umfasst, wobei die Halterungsbasis (17) einen Freiraum (25) aufweist, der von der Halterungsbasis (17) zumindest teilweise umlaufend um die erste optische Achse berandet bzw. umschlossen wird und eine Projektion des Freiraums (25) auf eine Projektionsebene senkrecht zu der ersten optischen Achse eine minimale Apertur der Abbildungsoptik (10, 21) vollständig einschließt, wobei sich von der Halterungsbasis (17) zumindest eine Strebe (19) geradlinig oder gekrümmt in den Freiraum (25) hinein erstreckt und die Halterungsbasis (17) mit dem Halteelement (18) verbindet, und wobei das Halteelement (18) zum Halten des Umlenkspiegels (9) ausgebildet ist.

7. System nach einem der vorhergehenden Ansprüche 1 bis 6, **dadurch gekennzeichnet, dass** die strahlungsdetektierende Vorrichtung (23) zur Detektion von elektromagnetischer Strahlung aus dem nahen Infrarotbereich des elektromagnetischen Spektrums ausgebildet ist.

8. System nach einem der vorhergehenden Ansprüche 1 bis 7, **dadurch gekennzeichnet, dass** die strahlungsdetektierende Vorrichtung (23) zur Detektion von elektromagnetischer Strahlung in einem Detektionsbereich als Teilbereich des elektromagnetischen Spektrums ausgebildet ist, der in einem zentralen Bereich die Wellenlänge der Laserstrahlung (5) einschließt.

9. System nach einem der vorhergehenden Ansprüche 1 bis 8, **dadurch gekennzeichnet, dass** die strahlungsdetektierende Vorrichtung (23) zur Detektion von elektromagnetischer Strahlung in einem Detektionsbereich als Teilbereich des elektromagnetischen Spektrums ausgebildet ist, der die Wellenlänge der Laserstrahlung (5) lediglich in einem Randbereich oder gar nicht einschließt.

10. System nach einem der vorhergehenden Ansprüche 1 bis 9, **dadurch gekennzeichnet, dass** die strahlungsdetektierende Vorrichtung (23) zumindest eine Photodiode, vorzugsweise eine Indiumgalliumarsenid-Photodiode, aufweist.

## Claims

1. System for joining at least two workpieces (11, 12) of thermoplastic material by laser transmission welding, the system comprising at least one device for generating laser radiation and an imaging optics (10, 21) having a first optical axis, wherein laser radiation (5) emitted by the device for generating laser radiation is guided into a joining zone, and wherein the imaging optics (10, 21) is configured for optical imaging from a joining plane (13) in the joining zone to a detection plane (22) of a radiation detecting device (23), wherein a deflection mirror (9) is provided at a coupling point (24) on a second optical axis, running parallel to the first optical axis, for deflecting the laser radiation (5) from an entrance axis (6) enclosing a non-zero angle , preferably a right angle, with the second optical axis, into a direction along the second optical axis, wherein the distance between the coupling point (24) and the joining plane (13) with respect to the second optical axis is smaller than the distance from the detection plane (22) to the joining plane (13) with respect to the first optical axis, wherein the diameter of the deflection mirror (9) is adapted to a cross-sectional shape and cross-sectional size of the laser radiation (5) and **characterized in that** when projecting the deflection mirror (9) onto a projection plane perpendicular to the first optical axis, the projection area of the deflection mirror (9) in the projection plane is arranged completely within a minimum aperture in the beam path of the imaging optics (10, 21) and only partially covers the minimum aperture.

2. System according to claim 1, **characterized in that** the projection of the deflection mirror (9) covers at most two thirds, preferably not more than half, of the minimum aperture of the imaging optics (10, 21).

3. System according to any of claims 1 or 2, **characterized in that** the first optical axis and the second optical axis coincide to form a common optical axis (15).

4. System according to any of claims 1 to 3, **characterized in that** at least one wavelength selective element (20) is arranged in a region along the first optical axis between the detection plane (22) and the coupling point (24).

5. System according to claim 4, **characterized in that** the wavelength selective element (20) is formed as a short pass filter, long pass filter, band pass filter or notch filter.

6. System according to any of claims 1 to 5, **characterized in that** the deflection mirror (9) is held by a deflection mirror mount (16), wherein the deflection mirror mount (16) comprises at least one holder base (17) and a holder element (18), the holder base (17) having a free space (25) which is bound or enclosed by the holder base (17) at least partially circumferentially about the first optical axis and a projection of the free space (25) onto a projection plane perpendicular to the first optical axis completely encloses a minimum aperture of the imaging optics (10, 21), wherein at least one brace (19) extends from the holder base (17) in a straight line or curved into the free space (25) and connects the holder base (17) to the holder element (18), and wherein the holder element (18) is configured to hold the deflection mirror (9).

7. System according to any of the preceding claims 1 to 6, **characterized in that** the radiation detecting device (23) is configured to detect electromagnetic radiation in the near infrared region of the electromagnetic spectrum.

8. System according to any of the preceding claims 1 to 7, **characterized in that** the radiation detecting device (23) is configured to detect electromagnetic radiation in a detection range in a subrange of the electromagnetic spectrum comprising in a central region the wavelength of the laser radiation (5).

9. System according to any of the preceding claims 1 to 8, **characterized in that** the radiation detecting device (23) is configured to detect electromagnetic radiation in a detection range in a subrange of the electromagnetic spectrum that comprises the wavelength of the laser radiation (5) only in a peripheral region or not at all.

10. System according to any one of the preceding claims 1 to 9, **characterized in that** the radiation detecting device (23) comprises at least one photodiode, in particular an indium-gallium-arsenide photodiode.

## Revendications

1. Système permettant d'assembler au moins deux pièces (11, 12) en matière thermoplastique par soudure laser par transmission, comprenant au moins un dispositif destiné à générer un rayonnement laser et une optique de formation d'image (10, 21) présentant un premier axe optique, dans lequel le rayonnement laser (5) émis par le dispositif destiné à générer un rayonnement laser est dirigé vers une zone d'assemblage et dans lequel l'optique de formation d'image (10, 21) est conçue pour la formation d'image optique à partir d'un plan d'assemblage (13) vers la zone d'assemblage dans un plan de détection (22) d'un dispositif de détection de rayonnement (23), dans lequel un miroir de déviation (9) est disposé en un point d'injection (24) sur un deuxième axe optique parallèle au premier axe optique pour dévier le rayonnement laser (5) par rapport à un axe d'entrée (6) formant avec le deuxième axe optique un angle qui ne diminue pas, de préférence un angle droit, dans une direction orientée suivant le deuxième axe optique, dans lequel la distance entre le point d'injection (24) et le plan d'assemblage (13) par rapport au deuxième axe optique est inférieure à la distance entre le plan de détection (22) et le plan d'assemblage (13) par rapport au premier axe optique, dans lequel le diamètre du miroir de déviation (9) est adapté à la forme de la section transversale et à la taille de la section transversale du rayonnement laser (5), et **caractérisé en ce que**, lors d'une projection du miroir de déviation (9) sur un plan de projection perpendiculaire au premier axe optique, la surface de projection du miroir de déviation (9) est disposée dans le plan de projection entièrement à l'intérieur d'une ouverture minimale sur le chemin du faisceau de l'optique de formation d'image (10, 21) et ne recouvre que partiellement l'ouverture minimale.

2. Système selon la revendication 1, **caractérisé en ce que** la projection du miroir de déviation (9) recouvre au maximum les deux tiers, de préférence pas plus de la moitié, de l'ouverture minimale de l'optique de formation d'image (10, 21).

3. Système selon l'une des revendications 1 ou 2, **caractérisé en ce que** le premier axe optique et le deuxième axe optique se confondent en un axe optique commun (15).

4. Système selon l'une des revendications 1 à 3, **caractérisé en ce qu'**au moins un élément sélectif en longueur d'onde (20) est disposé dans une zone le long du premier axe optique entre le plan de détection (22) et le point d'injection (24).

5. Système selon la revendication 4, **caractérisé en ce que** l'élément sélectif en longueur d'onde (20) est réalisé sous la forme d'un filtre passe-court, d'un filtre passe-long, d'un filtre passe-bande ou d'un filtre coupe-bande.

6. Système selon l'une des revendications 1 à 5, **caractérisé en ce que** le miroir de déviation (9) est maintenu par un support de miroir de déviation (16), dans lequel le support de miroir de déviation (16) comprend au moins une base de support (17) et un élément de support (18), dans lequel la base de support (17) présente un espace libre (25) qui est bordé ou entouré par la base de support (17) au moins partiellement sur le pourtour du premier axe optique et une projection de l'espace libre (25) sur un plan de projection perpendiculaire au premier axe optique englobe entièrement une ouverture minimale de l'optique de formation d'image (10, 21), dans lequel au moins une entretoise (19) s'étend depuis la base de support (17) de manière rectiligne ou incurvée dans l'espace libre (25) et relie la base de support (17) à l'élément de support (18), et dans lequel l'élément de support (18) est conçu pour maintenir le miroir de déviation (9).

7. Système selon l'une des revendications 1 à 6 précédentes, **caractérisé en ce que** le dispositif de détection de rayonnement (23) est conçu pour détecter un rayonnement électromagnétique provenant de la région proche infrarouge du spectre électromagnétique.

8. Système selon l'une des revendications 1 à 7 précédentes, **caractérisé en ce que** le dispositif de détection de rayonnement (23) est conçu pour détecter un rayonnement électromagnétique dans une zone de détection en tant que zone partielle du spectre électromagnétique qui inclut la longueur d'onde du rayonnement laser (5) dans une zone centrale.

9. Système selon l'une des revendications 1 à 8 précédentes, **caractérisé en ce que** le dispositif de détection de rayonnement (23) est conçu pour détecter un rayonnement électromagnétique dans une zone de détection en tant que zone partielle du spectre électromagnétique qui inclut la longueur d'onde du rayonnement laser (5) uniquement dans une zone de bord ou pas du tout.

10. Système selon l'une des revendications 1 à 9 précédentes, **caractérisé en ce que** le dispositif de détection de rayonnement (23) comprend au moins une photodiode, de préférence une photodiode à l'arséniure d'indium et de gallium.
